# EUROPEAN PATENT SPECIFICATION

(11) **EP 1 705 084 B1**
(45) Date of publication and mention of the grant of the patent: **19.11.2008**
(21) Application number: 05015926.8
(22) Date of filing: 22.07.2005
(51) Int. Cl.: B60R 25/02

(54) **Antitheft device for cars**
Diebstahlsicherung für Fahrzeuge
Dispositif antivol pour véhicules

(30) Priority: 24.03.2005 IT MI20050505
(43) Date of publication of application: 27.09.2006
(73) Proprietor: TAVOLA S.p.A., 20141 Milano (IT)
(72) Inventor: Chiaro, Luigi, 80125 Napoli (IT)
(74) Representative: La Ciura, Salvatore

(56) References cited:
- EP-A1- 0 701 933
- EP-A1- 0 745 521
- US-A1- 5 706 681
- US-A1- 5 906 122

## Description

This invention proposes an antitheft device, in particular suited for motor-vehicles, to be fitted to the steering wheel to lock it and prevent a thief from operating the automobile.

The device provides for a couple of tubular clamps sliding over each other made in such a way as to clamp a length of the steering wheel crown in order to prevent the steering wheel from rotating, with the device engaging the dashboard of the car by means of an adjustable inclination/projection locking arm, hinged to one of the aforesaid two clamps.

As everybody knows, the problem of automotive theft drives the car owners to be equipped with antitheft devices, in order to reduce the risk that their vehicle will be stolen by a theft.

Even though a wide range of electronic antitheft devices, which are difficult to disconnect or to tamper with, is available on the market, the user often prefers resorting to mechanical antitheft devices.

The reason for this is that usually the mechanical antitheft device gives a greater feeling of security and, besides making the theft operations more difficult, given its physical majesty well visible from the outside, is also useful to deter any potential car thief.

Furthermore, it often happens that the electronic antitheft device, sometimes properly hidden, is integrated with the functionality of a mechanical antitheft device.

In general this choice is hampered by the weight and the considerable size of the mechanical antitheft devices available on sale.

Also the way the antitheft device is operated represents often a negative element in the choice of the mechanical antitheft device, when for example its installation inside the car requires tricky operations in cramped uncomfortable positions such as, for example, near the pedals.

Mechanical antitheft devices which can be very easily fitted to the car steering wheel, limiting the possibility of use thereof, are known. The said antitheft devices have in fact purpose-built elongated and bulky shapes in such a way that, by rotating the steering wheel, they bump into inner elements of the passenger compartment such as the windscreen, the dashboard, the seat, the door or the driver window, thus obstructing the rotation.

The effectiveness of these kinds of antitheft devices depends just on their size; the bulkier they are, the lesser the free allowed rotation of the steering wheel will be.

A major disadvantage of these antitheft devices lies with their size, weight and their impossibility of lodge them in the passenger compartment when they are not in use, without sacrificing too much space.

EP-A- 0.701.933 relates to an antitheft device for locking the steering wheel of a vehicle, comprising a first outer locking element, provided with means for the coupling with a section of the steering wheel, a second inner locking element, movable with respect to said first locking element and provided with at least a projecting tongue which engages the steering wheel so as to lock the outer ring of the steering wheel and at least one spoke of the steering wheel, opening and closure means for the antitheft device, said first outer element being provided with a projection interfering with other parts of the vehicle so as to prevent the free rotation of the steering wheel when the antitheft device is on.

The aforesaid disadvantages and further drawbacks can be now overcome by this invention, which proposes a mechanical antitheft device to be fitted to the steering wheel, which is reduced in size and weight, easy to install and which, when in use, folds in on itself, thus taking up little space.

This invention will be now described in detail in a preferred embodiment, by way of example but without any limitation thereto, with reference to the enclosed figures, wherein:
- figure 1 shows the device of this invention in perspective;
- figure 2 is a perspective view of the device of figure 1 seen from the opposite side;
- figure 3 is a perspective view of the device of figure 2 in open position;
- figure 4 is a longitudinal section of the device of figure 1.

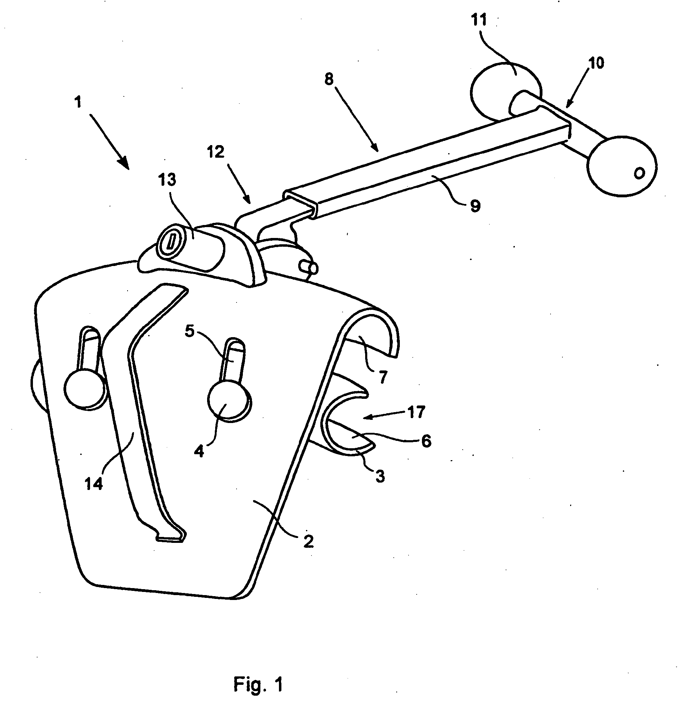

With reference to figure 1, 1 indicates the device as a whole, which mainly consists of a cover plate 2, which a movable clamp 3 is sliding-fitted to, in such a way as to move from a pulled-down or open position, in which the user is allowed to insert it up and down from the steering wheel, to a close position, in which the steering wheel remains clamped between the said plate and the said clamp, which plate has a curved contact edge 7 against which the clamp 3 clamps the steering wheel.

A locking arm 8 hinged to the plate 2 just close to curved edge 7 with a limited rotation width moves from a close position of minimum overall dimensions to an open position to engage the dashboard thus limiting the possibility of movement of the device itself and, as a result of it, of the steering wheel.

The clamp 3 is tubular-shaped with an opening 17 having such a width as to allow an easy fitting to the steering wheel.

From the opposite site of the opening 17, the clamp 3 is fitted with slides or swivels 4 which slide within the corresponding slits 5 fitted on the plane length of the plate 2.

The clamp 3, besides having a tubular profile, has a particular bending along its longitudinal length in order to conform to the steering wheel bending and the curved edge 7 of the plate 2 is also provided with a bending similar to the one of the steering wheel.

The upper edge 7 of the plate 2 is backwards curved for such a length as to contain, at least partially, the opening 17 of the clamp 3 when the said clamp is in the close position, thus preventing the steering wheel, which is inside of it, from sticking out.

The plane portion of the plate 2 extends from the curved upper edge 7 downwards for such a length as to cover at least the central part of the steering wheel, thus offering protection against burglary to airbag devices, if any, and the steering wheel hub. When the steering wheel is so armoured, the access to the clamp bolt is not allowed and therefore a thief is prevented from removing it to tamper with the antitheft device or to take away the airbag.

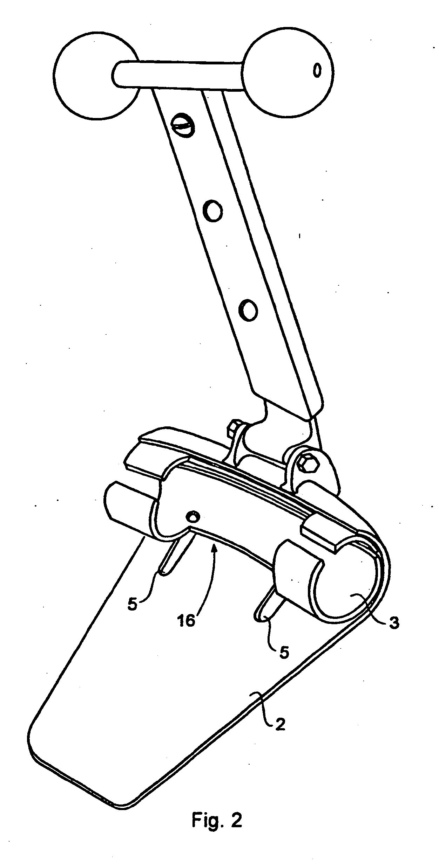

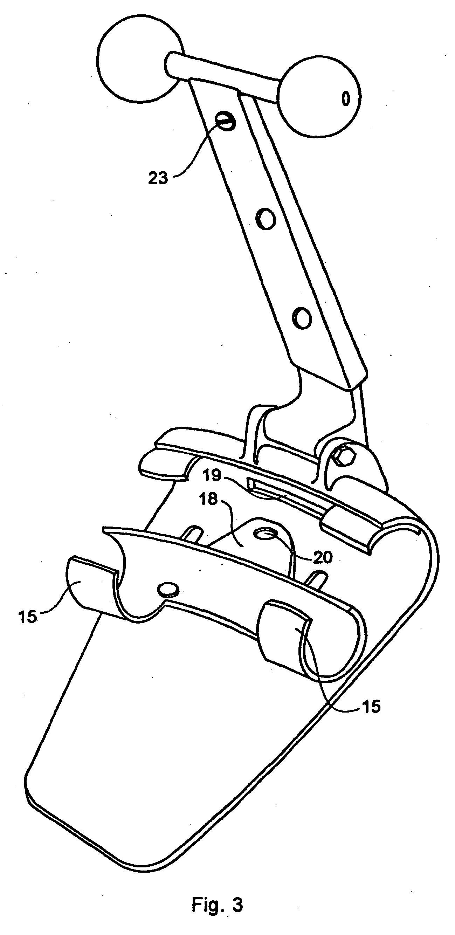

Figures 2 and 3 show the antitheft device respectively in the operating close position and in the open position for the fitting to the antitheft device.

In closed position the clamp 3 engages the inner surface of the curved edge 7 of the plate 2, thus creating a kind of tubular element which completely wraps around a length of the steering wheel.

Locking means of the clamp in close position are also provided. The said locking means consist of a tongue, integral with the clamp 3 and almost parallel to its slide plane, which extends over the said clamp and then leads into a corresponding slit provided in the curved edge 7 of the cover plate 2, and of a locking cylinder 13 fitted just close the edge 7, made in such a way as to engage a hole 20 made in the said tongue 18 to lock it in position.

The locking arm 8 consists of a telescopic structure to better conform, in its length, to more typologies of dashboards or to different kinds of motor-vehicles; one end 12 is hinged just close the edge 7 of the plate 2 in such a way as to allow only one rigid or guided rotation along an orthogonal plan of the steering wheel.

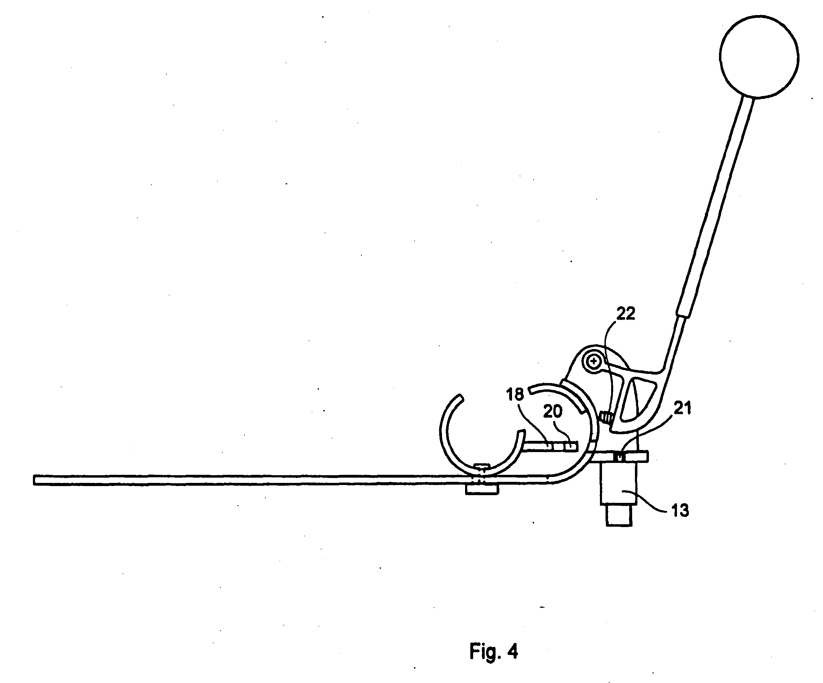

Adjustable locking devices, only schematically shown in figure 4 and marked with 22, allow limiting the width of rotation or maximum opening of the arm 8 to a desired level, approximately corresponding to a 90° angle to the plate 2.

The other free end terminates with a base 10 consisting of at least a couple of projections or mast feet 11, duly spaced out in order to give to the system as a whole the necessary stability preventing it from being removed by the thief.

A preferred embodiment of the invention provides for a screw 23 provided with a pre-breakage slot to allow locking the sliding portion 9 of the arm 8 to the fixed portion 12 in a pre-set position.

A handle 14 is then provided for, fitted to the plate 2 in order to facilitate the assembly and disassembly operations on and from the steering wheel. The functioning is the following.

At first the arm 8 is open and is placed with the base 10 resting on the dashboard; both the travel length of the body 9 and the maximum angle of opening are adjusted, by setting respectively the screw 23 and the proximity devices 22 according to the size and the shape of both the dashboard and the steering wheel.

The maximum opening of the arm 8 shall be such as to allow the device reaching approximately a 90° angle, in such a way that, after it has been fixed from one side to the steering wheel, clamped between the sliding clamp 3 and the cover plate 2, and on the other side resting with the base 10 to the dashboard until it completely opens, it can neither widen nor reduce itself.

When the device is in the opening position, the clamp 3 is pushed ahead until the upper portion of the steering wheel leads thereinto.

The lower portion of the clamp is shaped in such a way as to have, in its central part, a groove 16 into which a spoke of the steering wheel is inserted.

By using the handle 14, the cover plate 2 is pushed downwards; this way the clamp 3 is made sliding inside the slits 5 until it reaches the close position, thus locking the said portion of steering wheel between the said clamp 3 and the curved surface 7 of the cover plate 2 and locking the steering wheel spoke between the wings 15.

In this position, the hole 20 of the tongue 18 moves just close a pin 21 made in such a way as to be activated by the locking cylinder 13 to engage the said hole 20 and lock the clamp 3 in position.

The cover plate 2 then comes to cover the central portion of the steering wheel where the airbag is lodged and where also the locking devices of the steering wheel are fitted to its axis, protecting them against any burglary attempt.

When the user wishes to disconnect the antitheft device, it is sufficient to release the cylinder with its key, not shown by the drawings, rise the device simply using the handle 14 and fold the arm 8 in position of minimum overall dimensions.

When the device is so folded, it takes up a little space and can be lodged in any place, also inside the passenger compartment, without creating any impediment to the passengers.

A mechanical antitheft device, as the one described and shown above, will be easy to use by any user.

A skilled in the art may make changes and different versions which must be all considered included within the competence of this invention as claimed.

## Claims

1. Mechanical antitheft device to be fitted to the steering wheel of a motor-vehicle, of the kind comprising:
- a cover plate (2) provided with a curved edge (27) apt to fit around a length of the steering wheel;
- a sliding clamp (3) on the said cover plate which is provided with a side apt to be fitted around a length of the steering wheel opposing the said edge of the plate in such a way that the said length of the steering wheel remains clamped between the said plate (2) and the said clamp (3) where the said clamp can move from an open position for the insertion of the device on the steering wheel and a closed position in which it damps the steering wheel against the said plate;
- a locking arm (8) integral with the plate, apt to rest on the dashboard, thus preventing the steering wheel from being rotated, wherein the said side of the clamp (3), apt to fit around a length of the steering wheel, is provided, in its central portion, with a seat (16) apt to lodge, in its inside, a spoke of the steering wheel, in such a way as to prevent the steering wheel crown from sliding with respect to the device, **characterized in that** it provides for a fixed handle (14) fitted to the said cover plote (2).

2. Mechanical antitheft device according to the claim 1, **characterised in that** the said plate (2) extends beyond the central portion of the steering wheel, in such a way as to protect the airbag.

3. **characterized in that** it provides for a fixed handle (14) fitted to the said cover plote (2). Mechanical antitheft device according to any of the previous claim, **characterised in that** it provides for adjustable locking means (22) made in such a way as to adjust the opening of the locking arm.

4. Mechanical antitheft device according to any of the previous claim, **characterised in that** the said locking arm (8) consists of element which slide over each other, in such a way as to adjust the length thereof.

5. Mechanical antitheft device according to any of the previous claim, **characterised in that** it provides for a screw (25) locking the said sliding elements, provided with a pre-breakage slot apt to cause the breakage thereof when the said screw is tightened with a torque higher than a preset value.

## Patentansprüche

1. Mechanische Diebstahlsicherung, welche passend auf das Lenkrad eines Motorfahrzeuges aufgesetzt wird, vom Typ, welcher umfasst:
- eine Abdeckplatte (2), die mit einer gekrümmten Kante (7) versehen ist, welche geeignet ist, eine Umfangsstück des Lenkrades passend zu umfassen,
- eine auf der Abdeckplatte gleitende Klemme (3), welche mit einer Seite versehen ist, die geeignet ist, ein der Kante der Platte gegenüberliegendes Umfangsstück des Lenkrades in einer solchen Weise passend zu umfassen, dass dieses Umfangsstück des Lenkrades zwischen der Platte (2) und der Klemme (3) einklemmt bleibt, wobei diese Klemme zwischen einen offenen Stellung zum Aufsetzen der Diebstahlsicherung auf das Lenkrad und einer geschlossenen Stellung, in welcher sie das Lenkrad gegen die Platte drückt, bewegbar ist;
- einen in die Platte integrierten Arretierungsarm (8), welcher geeignet ist, am Armaturenbrett anzuliegen und **dadurch** eine Drehung des Lenkrades zu verhindern, wobei diejenige Seite der Klemme (3), welche geeignet ist, ein Umfangsstück des Lenkrades passen zu umfassen, in ihrem Mittelteil mit einer Sitzfläche (16) versehen ist, die an ihrer Innenseite geeignet ist, eine Speiche des Lenkrades in einer solchen Weise aufzunehmen, dass ein Gleiten des Umfanges des Lenkrades relativ zu der Diebstahlsicherung verhindert wird,
**dadurch gekennzeichnet, dass** ein fester, an der Abdeckplatte (2) angebrachter Handgriff (14) vorgesehen ist.

2. Mechanische Diebstahlsicherung nach Anspruch 1, **dadurch gekennzeichnet, dass** sich die Platte (2) derart über den zentralen Teil des Lenkrades erstreckt, dass der Airbag geschützt ist.

3. Mechanische Diebstahlsicherung nach einem der bisherigen Ansprüche, **dadurch gekennzeichnet, dass** für eine einstellbare Arretierungseinrichtung (22) eine derartige Ausführung vorgesehen ist, dass die Öffnung des Arretierungsarmes einstellbar ist.

4. Mechanische Diebstahlsicherung nach einem der bisherigen Ansprüche, **dadurch gekennzeichnet, dass** der Arretierungsarm (8) aus Elementen besteht, welche aufeinander gleiten, um auf diese Weise seine Länge einzustellen.

5. Mechanische Diebstahlsicherung nach einem der bisherigen Ansprüche, **dadurch gekennzeichnet, dass** für die Gleitelemente eine Schraubenarretierung (23) vorgesehen ist, welche mit einem Sollbruchschlitz versehen ist, um deren Bruch auszulösen, wenn die Schraube mit einem Drehmoment angezogen wird, das höher als ein vorgegebener Wert ist.

## Revendications

1. Dispositif mécanique antivol à adapter au volant de direction d'un véhicule à moteur, du type comprenant :
- une plaque (2) de couverture, munie d'un bord (7) apte à s'adapter autour d'un tronçon du volant de direction ;
- une bride (3) coulissante sur la plaque de couverture, qui est munie d'un côté apte à être adapté autour d'un tronçon du volant de direction opposé au bord de la plaque de façon à ce que le tronçon du volant de direction reste serré entre la plaque (2) et la bride (3), la bride pouvant se déplacer d'une position ouverte pour l'insertion du dispositif sur le volant de direction à une position fermée dans laquelle elle serre le volant de direction sur la plaque ;
- un bras (8) de verrouillage, intégré à la plaque, apte à reposer sur le tableau de bord, en empêchant ainsi le volant de direction de tourner, dans lequel le côté de la bride (3), apte à s'adapter à un tronçon du volant de direction, est muni, dans sa partie centrale, d'un siège (16) apte à loger en son intérieur un rayon du volant de direction de façon à empêcher la couronne du volant de direction de glisser par rapport au dispositif, **caractérisé en ce qu'**il est prévu une poignée (14) fixée adaptée à la plaque (2) de couverture.

2. Dispositif mécanique antivol suivant la revendication 1, **caractérisé en ce que** la plaque (2) s'étend au-delà de la partie centrale du volant de direction de façon à protéger le coussin d'air.

3. Dispositif mécanique antivol suivant l'une quelconque des revendications précédentes, **caractérisé en ce qu'**il est prévu des moyens (22) réglables de verrouillage faits de façon à régler l'ouverture du bras de verrouillage.

4. Dispositif mécanique antivol suivant quelconque des revendications précédentes, **caractérisé en ce que** le bras (8) de verrouillage consiste en des éléments qui glissent l'un sur l'autre de façon à en régler la longueur.

5. Dispositif mécanique antivol suivant quelconque des revendications précédentes, **caractérisé en ce qu'**il est prévu une vis (23) verrouillant les éléments glissant, munie d'une fente de prérupture, apte à en provoquer la rupture lorsque la vis est serrée avec un couple plus grand qu'une valeur fixée à l'avance.
